(19)

Europäisches
Patentamt

European
Patent Office

Office européen
des brevets

(11) **EP 4 625 809 A1**

(12) **EUROPEAN PATENT APPLICATION**
published in accordance with Art. 153(4) EPC

(43) Date of publication:
01.10.2025 Bulletin 2025/40

(21) Application number: 23894160.3

(22) Date of filing: 23.06.2023

(51) International Patent Classification (IPC):
*H02P 21/22* (2016.01)  *H02P 21/05* (2006.01)

(52) Cooperative Patent Classification (CPC):
H02P 21/05; H02P 21/22; H02P 27/06

(86) International application number:
PCT/JP2023/023296

(87) International publication number:
WO 2024/111144 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.11.2022 JP 2022187570

(71) Applicant: Hitachi Industrial Equipment Systems
Co., Ltd.
Tokyo 101-0021 (JP)

(72) Inventors:
• TOBARI, Kazuaki
  Tokyo 100-8280 (JP)

• ONUMA, Yusaku
  Tokyo 101-0021 (JP)
• SUGIMOTO, Takuya
  Tokyo 101-0021 (JP)
• HAYASHI, Takaaki
  Tokyo 101-0021 (JP)
• WATANABE, Hiroshi
  Tokyo 101-0021 (JP)

(74) Representative: MERH-IP Matias Erny Reichl
Hoffmann
Patentanwälte PartG mbB
Paul-Heyse-Straße 29
80336 München (DE)

(54) **POWER CONVERSION DEVICE AND MOTOR CONTROL SYSTEM**

(57) To provide a power conversion device and a motor control system capable of implementing stable speed control even if a speed response is enhanced. Therefore, there are provided a power converter 2 that converts DC power into AC power and outputs the AC power to an induction motor based on AC voltage command values $v_u^*$, $v_v^*$, and $v_w^*$ in stationary coordinates, and a controller CT that calculates the voltage command values in the stationary coordinates by vector control. The controller CT adds, to a steady-state value of a slip frequency determined by a d-axis current ($i_d$), a q-axis current ($i_q$), and a secondary time constant ($T_2$), a transient value determined by differential calculation using the d-axis current ($i_d$) and the q-axis current ($i_q$) to calculate a slip frequency command value $\omega_s^{**}$.

FIG. 10

**Description**

TECHNICAL FIELD

The present invention relates to a power conversion device and a motor control system, and, for example, relates to an induction motor control technique.

BACKGROUND ART

Patent Document 1 (Japanese Patent Laid-Open No. 2018-182989) discloses a system for subjecting a command value or a detection value in driving an induction motor by speed sensorless vector control to coordinate conversion into a value on a control axis (m-t axis) using a primary current direction and a direction delayed by 90 degrees therefrom as a rotating coordinate system and calculating a speed estimation value of the induction motor based on the converted values. In addition, in a formula (6) in Patent Document 1, a slip frequency command value $\omega_s{}^*$ is calculated according to the following formula (1) using $I_d{}^*$ and $I_q{}^*$ as d-axis and q-axis current command values. In the formula (1), $T_2$ represents a secondary time constant, and $T_{ACR}$ represents a time constant corresponding to a delay in current control. [Formula 1]

$$\omega_s{}^* = \frac{1}{T_2\, i_d{}^*} \cdot \frac{1}{1 + T_{ACR} \cdot s}\, i_q{}^* \qquad \cdots (1)$$

RELATED ART DOCUMENT

PATENT DOCUMENT

Patent Document 1: Japanese Patent Application Laid-Open Publication No. 2018-182989

SUMMARY OF THE INVENTION

PROBLEMS TO BE SOLVED BY THE INVENTION

In the system disclosed in Patent Document 1, the speed of the induction motor is estimated using m-t coordinates different from d-q coordinates. When this system is used, a torque loss that occurs when a primary resistance value R1 on the side of a stator in the induction motor changes depending on a winding temperature can be suppressed, making it possible to implement motor control less sensitive to an error (R1* - R1) of the primary resistance value R1. In addition, in Patent Document 1, a speed control calculation unit calculates a q-axis current command value ($I_q{}^*$) using a proportional gain ($Kp_{ASR}$) and an integral gain ($Ki_{ASR}$) of speed control, as expressed by a formula (2) in the document. The proportional gain and the integral gain determine a response performance of a speed control system.

On the other hand, when the induction motor is controlled, the speed of the induction motor is required to be quickly settled without any error for a speed command value. That is, high-accuracy and high-response speed control is required. However, in the system disclosed in Patent Document 1, when a response of the speed control system is made higher than a value corresponding to the reciprocal of a secondary time constant in the induction motor, speed control becomes unstable due to a change in a magnetic flux in the m-t coordinates, whereby vibrations may occur in a motor speed and a torque.

The present invention has been made in view of such circumstances, and one of its objects is to provide a power conversion device and a motor control system capable of implementing stable speed control even if a speed response is enhanced.

The above and other objects and novel features of the present invention will be apparent from the description of the present specification and the accompanying drawings.

MEANS FOR SOLVING THE PROBLEMS

An outline of a typical embodiment in the invention disclosed in the present application will be briefly described as follows.

A power conversion device according to one embodiment includes a power converter that converts DC power into AC power and outputs the AC power to an induction motor based on a voltage command value in stationary coordinates, and a controller that calculates the voltage command value in the stationary coordinates by vector control. The controller adds, to a steady-state value of a slip frequency determined by a d-axis current, a q-axis current, and a secondary time constant, a transient value determined by differential calculation using the d-axis current and the q-axis current to calculate a slip frequency command value.

EFFECTS OF THE INVENTION

When an effect obtained by the typical embodiment in the invention disclosed in the present application will be briefly described, stable speed control can be implemented even if a speed response is enhanced.

BRIEF DESCRIPTIONS OF THE DRAWINGS

[FIG. 1] is a block diagram illustrating a configuration example of a motor control system according to a first embodiment.
[FIG. 2] is a vector diagram illustrating d-q coordinates as one type of control coordinates in FIG. 1.
[FIG. 3] is a vector diagram illustrating m-t coordinates as another type of control coordinates in FIG. 1.
[FIG. 4] is a block diagram illustrating a detailed configuration example of a frequency estimation and phase calculation unit in FIG. 1.
[FIG. 5] is a diagram illustrating an example of a speed step response characteristic in a case where a slip frequency command value is calculated using a calculation formula disclosed in Patent Document 1.
[FIG. 6] is a diagram illustrating an example of a speed step response characteristic in a case where the slip frequency command value is calculated using the calculation formula disclosed in Patent Document 1.
[FIG. 7] is a diagram illustrating an example of a speed step response characteristic in a case where a slip frequency command value is calculated using a calculation formula according to the first embodiment.
[FIG. 8] is a diagram illustrating an example of a speed step response characteristic in a case where the slip frequency command value is calculated using the calculation formula according to the first embodiment.
[FIG. 9] is a diagram illustrating an example of a method for observing a slip frequency in an induction motor.
[FIG. 10] is a block diagram illustrating a configuration example obtained by extracting a principal part in a power conversion device illustrated in FIGs. 1 and 4.
[FIG. 11] is a block diagram illustrating a detailed configuration example of the frequency estimation and phase calculation unit in FIG. 1 in a power conversion device according to a second embodiment.
[FIG. 12] is a block diagram illustrating a detailed configuration example of the frequency estimation and phase calculation unit in FIG. 1 in a power conversion device according to a third embodiment.
[FIG. 13] is a block diagram illustrating a detailed configuration example of the frequency estimation and phase calculation unit in FIG. 1 in a power conversion device according to a fourth embodiment.
[FIG. 14] is a block diagram illustrating a configuration example of a motor control system according to a fifth embodiment.
[FIG. 15] is a block diagram illustrating a detailed configuration example of a frequency detection and phase calculation unit in FIG. 14.
[FIG. 16] is a block diagram illustrating a configuration example of a motor control system according to a sixth embodiment.
[FIG. 17] is a block diagram illustrating a configuration example of a motor control system according to a seventh embodiment.

DETAILED DESCRIPTION OF PREFERRED EMBODIMENTS

Embodiments of the present invention will be described in detail below with reference to the drawings. Note that in all the drawings for describing the embodiments, the same members are respectively denoted by the same reference numerals in principal, and description thereof is not repeated.

(First Embodiment)

<Outline of Motor Control System>

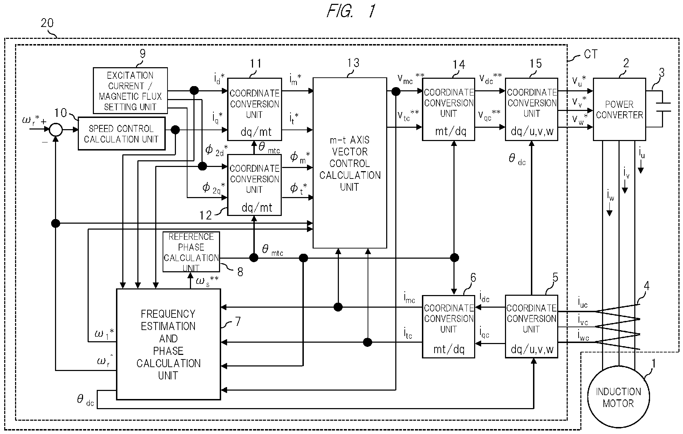

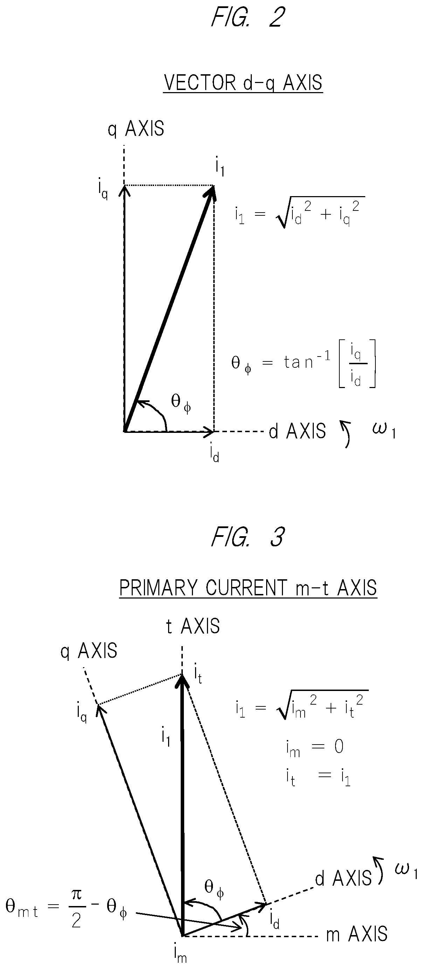

FIG. 1 is a block diagram illustrating a configuration example of a motor control system according to a first embodiment. The motor control system illustrated in FIG. 1 includes an induction motor 1 and a power conversion device 20 that controls rotation of the induction motor 1 by outputting AC power to the induction motor 1. The power conversion device 20 controls the rotation of the induction motor 1 using vector control, here, speed sensorless vector control. First, control axes used for the vector control in FIG. 1 will be described with reference to FIGs. 2 and 3.

FIG. 2 is a vector diagram illustrating d-q coordinates as one type of control coordinates in FIG. 1. In FIG. 2, a d-axis is an axis representing a magnetic flux direction of the induction motor 1, and a q-axis is an axis representing a direction perpendicular to the d-axis, specifically, a direction advanced by 90 degrees ($\pi / 2$) from the d-axis. The power conversion device 20 properly controls a d-axis current $i_d$ flowing through the d-axis and a q-axis current $i_q$ flowing through the q-axis, to control a primary current $i_1$ flowing through a stator of the induction motor 1.

The primary current $i_1$ is determined by vector synthesis of the d-axis current $i_d$ and the q-axis current $i_q$. That is, a value of the primary current $i_1$ is determined by a formula (2) using a value of the d-axis current $i_d$ and a value of the q-axis current $i_q$. In addition, a phase angle $\theta_\phi$ between a phase of the d-axis current $i_d$ and a phase of the primary current $i_1$ is determined by a formula (3).

[Formula 2]

$$i_1 = \sqrt{i_d{}^2 + i_q{}^2} \qquad \cdots (2)$$

[Formula 3]

$$\theta_\phi = tan^{-1} \left[ \frac{i_q}{i_d} \right] \qquad \cdots (3)$$

FIG. 3 is a vector diagram illustrating m-t coordinates as another type of control coordinates in FIG. 1. The motor control system according to the first embodiment performs the vector control using the m-t coordinates in addition to the general d-q coordinates, as in the case of Patent Document 1. In FIG. 3, a t-axis is an axis representing a direction of the primary current $i_1$, and an m-axis is an axis representing a direction perpendicular to the t-axis, specifically, a direction delayed by 90 degrees ($\pi / 2$) from the t-axis. A value of the primary current $i_1$ is determined by a formula (4) using a value of an m-axis current $i_m$ and a value of a t-axis current it. In the formula (4), the value of the m-axis current $i_m$ is zero, and the value of the t-axis current it is equal to the value of the primary current $i_1$. In addition, a phase angle $\theta_{mt}$ between the m-axis and the d-axis is "$\theta_{mt} = (\pi / 2) - \theta_\phi$".

[Formula 4]

$$i_1 = \sqrt{i_m{}^2 + i_t{}^2} \qquad \cdots (4)$$

Referring back to FIG. 1, the induction motor 1 generates a torque in response to a magnetic flux ($\phi_{2d}$) generated by the d-axis current $i_d$ as a current of a magnetic flux axis component and the q-axis current $i_q$ as a current of a torque axis component perpendicular to a magnetic flux axis. The m-t coordinates are mainly used when a rotational speed of the induction motor 1 is estimated, for example. The power conversion device 20 includes a power converter 2 connected to a DC power supply 3, a current detector 4, and a controller CT that calculates voltage command values $v_u{}^*$, $v_v{}^*$, and $v_w{}^*$ to the power converter 2 by vector control.

The power converter 2 converts a DC voltage from the DC power supply 3 into a three-phase AC voltage based on the three-phase AC voltage command values $v_u{}^*$, $v_v{}^*$, and $v_w{}^*$, and outputs the three-phase AC voltage to the induction motor 1. An output amplitude and an output frequency of the three-phase AC voltage are determined based on the voltage command values $v_u{}^*$, $v_v{}^*$, and $v_w{}^*$. The power converter 2 is implemented by, for example, a three-phase inverter circuit including a switching element such as an IGBT (insulated gate bipolar transistor) or a MOSFET (metal oxide semiconductor field effect transistor).

The current detector 4 detects three-phase AC currents $i_u$, $i_v$, and $i_w$ flowing through the induction motor 1, and outputs three-phase current detection values $i_{uc}$, $i_{vc}$, and $i_{wc}$. Note that the current detector 4 may detect phase currents of two of three phases, e.g., a U phase and a W phase in the induction motor 1 and calculate a line current of a V phase by "$i_v = -(i_u + i_w)$" from an AC condition, i.e., a relationship of "$i_u + i_v + i_w = 0$". Details of the controller CT will be described below.

A coordinate conversion unit 5 converts the three-phase current detection values $i_{uc}$, $i_{vc}$, and $i_{wc}$ in stationary coordinates into current detection values $i_{dc}$ and $i_{qc}$ of two phases, i.e., the d-axis and the q-axis in rotating coordinates using a phase estimation value $\theta_{dc}$. and outputs the d-axis and q-axis current detection values. The phase estimation value $\theta_{dc}$ is an estimation value of a phase angle between the stationary coordinates and a magnetic flux axis (d-axis) that rotates with the stationary coordinates as a reference. A coordinate conversion unit 6 converts the d-axis and q-axis current detection values $i_{dc}$ and $i_{qc}$ into m-axis and t-axis current detection values $i_{mc}$ and $i_{tc}$ using a phase estimation angle $\theta_{mtc}$ and outputs the m-axis and t-axis current detection values. The phase estimation angle $\theta_{mtc}$ is an estimation value of a phase angle $\theta_{mt}$ between the m-axis and the d-axis.

A frequency estimation and phase calculation unit 7 performs calculation using d-axis and q-axis current command values $i_d{}^*$ and $i_q{}^*$, the m-axis and t-axis current detection values $i_{mc}$ and $i_{tc}$, an m-axis voltage command value $v_{mc}{}^{**}$, a d-axis secondary magnetic flux command value $\phi_{2d}{}^*$, and electric circuit parameters (R1, R2', Lσ, M, L2) of the induction motor 1. Then, the frequency estimation and phase calculation unit 7 outputs a speed estimation value $\omega_r{}^\wedge$ of the induction motor 1, a slip frequency command value $\omega_s{}^{**}$, an output frequency command value $\omega_1{}^*$, and the phase estimation value $\theta_{dc}$ as a calculation result.

A reference phase calculation unit 8 calculates and outputs the estimation angle $\theta_{mtc}$ of the phase angle $\theta_{mt}$ between the m-axis and the d-axis according to a formula (5) using the slip frequency command value $\omega_s{}^{**}$. In the formula (5), $T_2$ represents a secondary time constant of the induction motor 1, and is a value determined by a resistance component (R2) and a self-inductance component (L2) of a rotor.

[Formula 5]

$$\theta_{mtc} = \frac{\pi}{2} - tan^{-1}\left(\omega_s{}^{**}\,T_2\right) \qquad \cdots (5)$$

An excitation current / magnetic flux setting unit 9 sets and outputs an excitation current command value having a positive polarity, i.e., the d-axis current command value $i_d{}^*$, the d-axis secondary magnetic flux command value $\phi_{2d}{}^*$ having a positive polarity, and a q-axis secondary magnetic flux command value $\phi_{2q}{}^*$ that is "0". A speed control calculation unit 10 calculates and outputs the q-axis current command value $i_q{}^*$ using proportional integral (PI) control based on a deviation "$\omega_r{}^* - \omega_r{}^\wedge$" between a speed command value $\omega_r{}^*$ to the induction motor 1 and the speed estimation value $\omega_r{}^\wedge$ of the induction motor 1 calculated by the frequency estimation and phase calculation unit 7.

A coordinate conversion unit 11 converts the d-axis and q-axis current command values $i_d{}^*$ and $i_q{}^*$ into m-axis and t-axis current command values $i_m{}^*$ and it* using the phase estimation angle $\theta_{mtc}$ and outputs the m-axis and t-axis current command values. A coordinate conversion unit 12 converts the d-axis and q-axis secondary magnetic flux command values $\phi_{2d}{}^*$ and $\phi_{2q}{}^*$ into m-axis and t-axis magnetic flux command values $\phi_m{}^*$ and $\phi_t{}^*$ using the phase estimation angle $\theta_{mtc}$ and outputs the m-axis and t-axis magnetic flux command values.

An m-t axis vector control calculation unit 13 performs calculation based on the electric circuit parameters (R1, R2', Lσ, M, and L2) of the induction motor 1, the m-axis and t-axis magnetic flux command values $\phi_m{}^*$ and $\phi_t{}^*$, the current command values $i_m{}^*$ and it*, the current detection values $i_{mc}$ and $i_{tc}$, the speed estimation value $\omega_r{}^\wedge$ of the rotor, and the output frequency command value $\omega_1{}^*$ for the stator. Then, the m-t axis vector control calculation unit 13 outputs m-axis and t-axis voltage command values $v_{mc}{}^{**}$ and $v_{tc}{}^{**}$ as a calculation result.

A coordinate conversion unit 14 converts the m-axis and t-axis voltage command values $v_{mc}{}^{**}$ and $v_{tc}{}^{**}$ into d-axis and q-axis voltage command values $v_{dc}{}^{**}$ and $v_{qc}{}^{**}$ using the phase estimation angle $\theta_{mtc}$ and outputs the d-axis and q-axis voltage command values. A coordinate conversion unit 15 converts the d-axis and q-axis voltage command values $v_{dc}{}^{**}$ and $v_{qc}{}^{**}$ in the rotating coordinates into the three-phase AC voltage command values $v_u{}^*$, $v_v{}^*$, and $v_w{}^*$ in the stationary coordinates using the phase estimation value $\theta_{dc}$ and outputs the three-phase AC voltage command values.

Next, a basic operation using speed sensorless vector control by the motor control system illustrated in FIG. 1 will be described. First, the excitation current / magnetic flux setting unit 9 outputs the d-axis current command value $i_d{}^*$ required to generate a d-axis secondary magnetic flux value $\phi_{2d}$ in the induction motor 1. In addition, the speed control calculation unit 10 calculates the q-axis current command value $i_q{}^*$ according to a formula (6) such that the speed estimation value $\omega_r{}^\wedge$ follows the speed command value $\omega_r{}^*$. In the formula (6), Kp_ASR represents a proportional gain of speed control, Ki_ASR represents an integral gain of speed control, and s represents a complex number.

[Formula 6]

$$i_q{}^* = \left( Kp\_ASR + \frac{Ki\_ASR}{s} \right) \left(\omega_r{}^* - \omega_r{}^\wedge\right) \qquad \cdots (6)$$

The m-t axis vector control calculation unit 13 calculates a formula (7) using the m-axis and t-axis current command values $i_m{}^*$ and it* obtained by subjecting the d-axis and q-axis current command values $i_d{}^*$ and $i_q{}^*$ to coordinate conversion, the electric circuit parameters (R1, R2', Lσ, M, and L2) of the induction motor 1, the m-axis and t-axis magnetic flux command values $\phi_m{}^*$ and $\phi_t{}^*$, the speed estimation value $w_r{}^\wedge$, and the output frequency command value $\omega_1{}^*$. As a result, the m-t axis vector control calculation unit 13 calculates m-axis and t-axis voltage reference values $v_{mc}{}^*$ and $v_{mt}{}^*$.

[Formula 7]

$$\begin{bmatrix} v_{mc}{}^* = (R1^* + R2'^*)i_m{}^* - \omega_1{}^* L\sigma^* \dfrac{1}{1 + T_{ACR} \cdot s} \, i_t{}^* - \omega_r{}^\wedge \dfrac{M^*}{L2^*}\phi_t{}^* - \dfrac{R2'^*}{M^*}\phi_m{}^* \\ v_{tc}{}^* = (R1^* + R2'^*)i_t{}^* + \omega_1{}^* L\sigma^* \dfrac{1}{1 + T_{ACR} \cdot s} \, i_m{}^* + \omega_r{}^\wedge \dfrac{M^*}{L2^*}\phi_m{}^* - \dfrac{R2'^*}{M^*}\phi_t{}^* \end{bmatrix}$$

$$\cdots(7)$$

In the formula (7), $R1^*$ represents a primary resistance value, i.e., a resistance value of the stator. $R2'^*$ represents a secondary resistance value obtained by conversion on the primary side, i.e., a resistance value of the rotor obtained by conversion on the stator side. $L\sigma^*$ represents a leakage inductance value. $M^*$ represents a mutual inductance value. $L2^*$ represents a self-inductance value on the secondary side, i.e., of the rotor. $T_{ACR}$ represents a time constant corresponding to a delay in current control, and s represents a complex number.

In addition, the m-t axis vector control calculation unit 13 performs PI control according to a formula (8) such that the m-axis current detection value $i_{mc}$ follows the current command value $i_m{}^*$, to calculate an m-axis voltage correction value $\Delta v_m{}^*$. Similarly, the m-t axis vector control calculation unit 13 performs PI control according to the formula (8) such that the t-axis current detection value $i_{tc}$ follows the current command value $i_t{}^*$, to calculate a t-axis voltage correction value $\Delta v_t{}^*$. In the formula (8), Kp_m represents a proportional gain of m-axis current control, and Ki_m represents an integral gain of m-axis current control. Kp_t represents a proportional gain of t-axis current control, and Ki_t represents an integral gain of t-axis current control.

[Formula 8]

$$\begin{bmatrix} \Delta v_m{}^* = \left( Kp\_m + \dfrac{Ki\_m}{s} \right)(i_m{}^* - i_{mc}) \\ \Delta v_t{}^* = \left( Kp\_t + \dfrac{Ki\_t}{s} \right)(i_t{}^* - i_{tc}) \end{bmatrix} \quad \cdots(8)$$

Then, the m-t axis vector control calculation unit 13 adds the m-axis and t-axis voltage correction values $\Delta v_m{}^*$ and $\Delta v_t{}^*$ calculated by the formula (8) to the m-axis and t-axis voltage reference values $v_{mc}{}^*$ and $v_{mt}{}^*$ calculated by the formula (7), to calculate the m-axis and t-axis voltage command values $v_{mc}{}^{**}$ and $v_{tc}{}^{**}$, as expressed by a formula (9). The m-axis and t-axis voltage command values $v_{mc}{}^{**}$ and $v_{tc}{}^{**}$ are converted into the three-phase AC voltage command values $v_u{}^*$, $v_v{}^*$, and $v_w{}^*$ through coordinate conversion into the d-axis and the q-axis and coordinate conversion into a u-axis, a v-axis, and a w-axis.

[Formula 9]

$$\begin{bmatrix} v_{mc}{}^{**} = v_{mc}{}^* + \Delta v_m{}^* \\ v_{tc}{}^{**} = v_{tc}{}^* + \Delta v_t{}^* \end{bmatrix} \quad \cdots(9)$$

<Details of Frequency Estimation and Phase Calculation Unit>

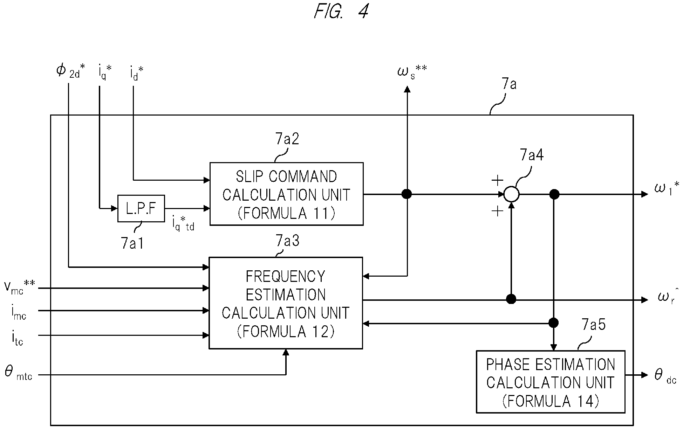

FIG. 4 is a block diagram illustrating a detailed configuration example of the frequency estimation and phase calculation unit 7 in FIG. 1. A frequency estimation and phase calculation unit 7a illustrated in FIG. 4 includes a low-pass filter (L.P.F) 7a1, a slip command calculation unit 7a2, a frequency estimation calculation unit 7a3, an addition unit 7a4, and a phase estimation calculation unit 7a5.

The low-pass filter (L.P.F) 7a1 delays the q-axis current command value iq* by a primary delay transfer function "1 / $(1 + T_{ACR} \cdot s)$" based on the time constant $T_{ACR}$, to calculate a q-axis delayed current command value $i_q{}^*{}_{td}$, as expressed by a formula (10). The time constant $T_{ACR}$ is determined to a value corresponding to the delay in current control, as also described in the formula (7). The q-axis delayed current command value $i_q{}^*{}_{td}$ represents the q-axis current detection value

$i_{qc}$ in a pseudo manner by delaying the q-axis current command value $i_q^*$ by only the time constant $T_{ACR}$.
[Formula 10]

$$i_q{}^*{}_{td} = \frac{1}{1 + T_{ACR} \cdot s} i_q{}^* \quad \cdots(10)$$

The slip command calculation unit 7a2 calculates the slip frequency command value $\omega_s^{**}$ using the q-axis delayed current command value $i_q^*{}_{td}$, the d-axis current command value $i_d^*$, and the secondary time constant $T_2$ of the induction motor 1, as expressed by a formula (11). The slip frequency command value $\omega_s^{**}$ expressed by the formula (11) is obtained by adding a term "d / dt (tan$^{-1}$ ($i_q^*{}_{td}$ / $i_d^*$))" to the slip frequency command value $\omega_s^*$ expressed by the formula (1).
[Formula 11]

$$\omega_s{}^{**} = \frac{1}{T_2 \, i_d{}^*} \cdot i_q{}^*{}_{td} + \frac{d}{dt}\left(tan^{-1}\left[\frac{i_q{}^*{}_{td}}{i_d{}^*}\right]\right) \quad \cdots(11)$$

Here, a first term "$i_q^*{}_{td}$ / ($T_2 i_d^*$)" in the formula (11), i.e., the slip frequency command value $\omega_s^*$ expressed by the formula (1) represents a steady-state value of a slip frequency command. On the other hand, a second term "d / dt (tan$^{-1}$ ($i_q^*{}_{td}$ / $i_d^*$))" in the formula (11) represents a transient value of the slip frequency command, and represents a time differential value of the phase angle $\theta_\phi$ between the d-axis current $I_d$ and the primary current $i_1$ illustrated in FIGs. 2 and 3.
The frequency estimation calculation unit 7a3 calculates the speed estimation value $\omega_r^\wedge$ of the induction motor 1 using the d-axis secondary magnetic flux command value $\phi_{2d}^*$, the m-axis voltage command value $v_{mc}^{**}$ and current detection value $i_{mc}$, the t-axis current detection value $i_{tc}$, the slip frequency command value $\omega_s^{**}$, the output frequency command value $\omega_1^*$, the phase estimation angle $\theta_{mtc}$, and the electric circuit parameters of the induction motor 1, as expressed by a formula (12). The electric circuit parameters of the induction motor 1 include R1*, R2'*, Lσ*, M*, and L2* also described in the formula (7). In addition, $T_{obs}$ represents a time constant of a filter included in a disturbance observer forming the frequency estimation calculation unit 7a3.
[Formula 12]

$$\omega_r{}^\wedge = \frac{1}{1 + T_{obs} \cdot s}\left[-\left(\frac{v_{mc}{}^{**} + \omega_1{}^* L\sigma^* i_{tc} - (R1^* + R2'^*)\, i_{mc} - L\sigma^* \cdot s\, i_{mc}}{\frac{M^*}{L2^*}\phi_{2d}{}^* \, sin[\theta_{mtc}]}\right) - \omega_s{}^{**}\right]$$

$$\cdots(12)$$

Here, in the formula (12), the frequency estimation calculation unit 7a3 calculates the speed estimation value $\omega_r^\wedge$ based on the command values and detection values in the m-t coordinates. In this case, in "(R1* + R2'*) $i_{mc}$" in the formula (12), the current detection value $i_{mc}$ is substantially zero, as can be seen from FIG. 3. On the other hand, if the speed estimation value $\omega_r^\wedge$ is calculated based on the command values and detection values in the d-q coordinates, the current detection value ($i_{dc}$) used instead of the current detection value $i_{mc}$ is not substantially zero. Therefore, when not the d-q coordinates but the m-t coordinates are used, a sensitivity to an error of the primary resistance value R1* is low, making it possible to calculate the speed estimation value $\omega_r^\wedge$ with high accuracy.
The addition unit 7a4 adds the slip frequency command value $\omega_s^{**}$ to the speed estimation value $w_r^\wedge$, to calculate the output frequency command value $\omega_1^*$, as expressed by a formula (13). The phase estimation calculation unit 7a5 integrates the output frequency command value $\omega_1^*$, to calculate the phase estimation value $\theta_{dc}$ of the magnetic flux axis of the induction motor 1, as expressed by a formula (14). Sensorless control is performed using this phase estimation value $\theta_{dc}$ of the magnetic flux axis as a reference phase.
[Formula 13]

$$\omega_1{}^* = \omega_r{}^\wedge + \omega_s{}^{**} \quad \cdots(13)$$

[Formula 14]

$$\theta_{dc} = \frac{1}{s}\omega_1{}^* \qquad \cdots(14)$$

<Verification Result of Speed Control Characteristic>

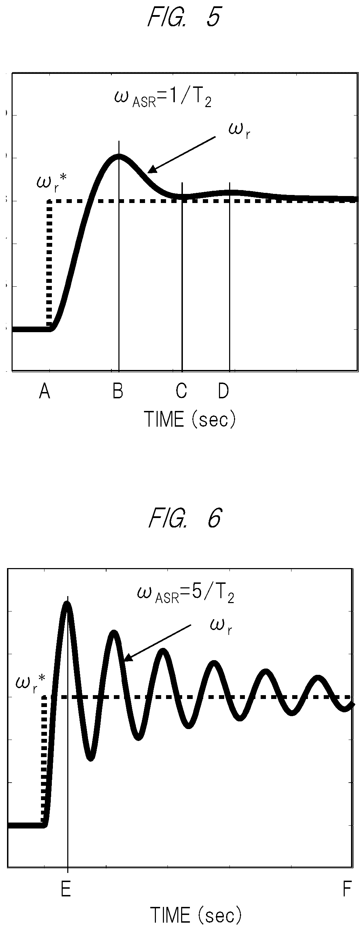

FIGs. 5 and 6 are diagrams each illustrating an example of a speed step response characteristic in a case where a slip frequency command value is calculated using the calculation formula disclosed in Patent Document 1. FIGs. 5 and 6 respectively illustrate characteristics in a case where the formula (1) is used to calculate a slip frequency command value. In addition, FIG. 5 illustrates a characteristic in a case where a response angular frequency $\omega_{ASR}$ of a speed control system is set to "1 / $T_2$" (rad / s) as the reciprocal of a secondary time constant $T_2$ of an induction motor 1. The response angular frequency $\omega_{ASR}$ of the speed control system is determined by respective values of a proportional gain Kp_ASR and an integral gain Ki_ASR of speed control expressed by the formula (6).

As illustrated in FIG. 5, when a speed command value $\omega_r{}^*$ is changed by 3Hz in a stepwise manner at a time point A, a speed $\omega_r$ of the induction motor 1 also changes depending on a change in the speed command value $\omega_r{}^*$. It is found that the speed $\omega_r$ reaches a maximum at a time point B, decreases once at a time point C, and increases until a time point D. That is, it is found that a vibration has occurred in the speed $\omega_r$ of the induction motor 1.

On the other hand, FIG. 6 illustrates a characteristic in a case where the response angular frequency $\omega_{ASR}$ of the speed control system is set to "5 / $T_2$" (rad / s) higher than in the case of FIG. 5. When the response angular frequency $\omega_{ASR}$ is increased, a response of the speed $\omega_r$ of the induction motor 1 to the change in the speed command value $\omega_r{}^*$ can be enhanced. However, the speed $\omega_r$ in FIG. 6 more greatly vibrates from a time point E where it reaches a maximum speed than in the case of FIG. 5. Then, this vibration is continued until a time point F longer than in the case of FIG. 5.

When the system disclosed in Patent Document 1 is thus used, it is difficult to enhance a response of the speed control system from the viewpoint of the vibration or the like. Examples of its factor include a case where a magnetic flux in d-q coordinates is constant regardless of a slip frequency $\omega_s$, while a magnetic flux in m-t coordinates changes depending on the slip frequency $\omega_s$. Specifically, a magnetic flux $\phi_{2d}$ on a d-axis is "M $\times$ $i_d$", and a magnetic flux $\phi_{2q}$ on a q-axis is zero. On the other hand, a magnetic flux $\phi_m$ on an m-axis is "$\omega_s \times T_2 \times \phi_t$", and a magnetic flux $\phi_t$ on a t-axis is "M $\times$ it - $\omega_s \times T_2 \times \phi_m$".

That is, the magnetic fluxes $\phi_m$ and $\phi_t$ in the m-t coordinates, specifically, secondary magnetic fluxes each enter a steady state after changing over a time period corresponding to the secondary time constant $T_2$ depending on the slip frequency $\omega_s$. Accordingly, particularly when the response angular frequency $\omega_{ASR}$ of the speed control system is made higher than about "1 / $T_2$", speed control is unstable in a transient state where the secondary magnetic fluxes change over the time period corresponding to the secondary time constant $T_2$, whereby the vibration as illustrated in FIG. 6 occurs.

The slip command calculation unit 7a2 calculates a slip frequency command value $\omega_s{}^{**}$ using not the formula (1) including a steady-state value "$i_q{}^*{}_{td}$ / ($T_2 i_d{}^*$)" but the formula (11) including a steady-state value and a transient value "d / dt (tan$^{-1}$ ($i_q{}^*{}_{td}$ / $i_d{}^*$))". That is, the slip command calculation unit 7a2 corrects the slip frequency command value $\omega_s{}^{**}$ using a transient value following changes in a q-axis delayed current command value $i_q{}^*{}_{td}$ and a d-axis current command value $i_d{}^*$, here, a differential value of a phase angle $\theta_\phi$ in a transient state.

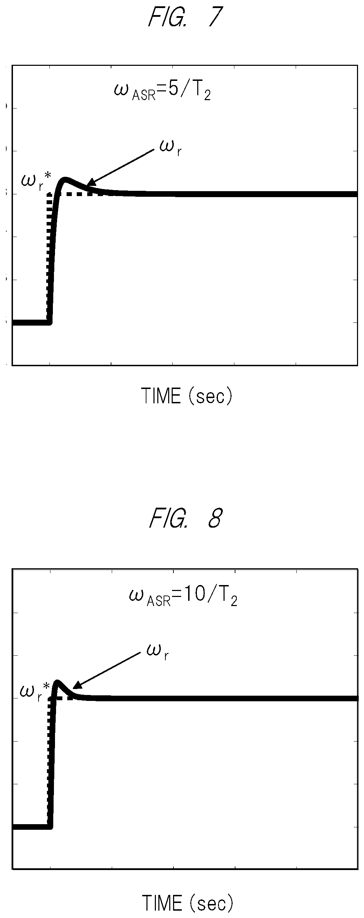

FIGs. 7 and 8 are diagrams each illustrating an example of a speed step response characteristic in a case where a slip frequency command value is calculated using the calculation formula according to the first embodiment. FIGs. 7 and 8 respectively illustrate characteristics in a case where the formula (11) is used to calculate the slip frequency command value. In addition, FIG. 7 illustrates a characteristic in a case where a response angular frequency $\omega_{ASR}$ is set to "5 / $T_2$" (rad / s), as in the case of FIG. 6, and FIG. 8 illustrates a characteristic in a case where the response angular frequency $\omega_{ASR}$ is further increased and is set to "10 / $T_2$" (rad / s).

As can be seen from comparison between the characteristic illustrated in FIG. 6 and the characteristic illustrated in FIG. 7, a vibration in a speed $\omega_r$ of the induction motor 1 can be suppressed or prevented by using the system according to the first embodiment. Even when the response angular frequency $\omega_{ASR}$ is further increased, the vibration in the speed $\omega_r$ of the induction motor 1 can be suppressed or prevented, as illustrated in FIG. 8. Thus, by using the system according to the first embodiment, stable speed control can be implemented without any vibration occurring in the speed $\omega_r$ of the induction motor 1 even if a speed response is enhanced.

<Method for Observing Slip Frequency>

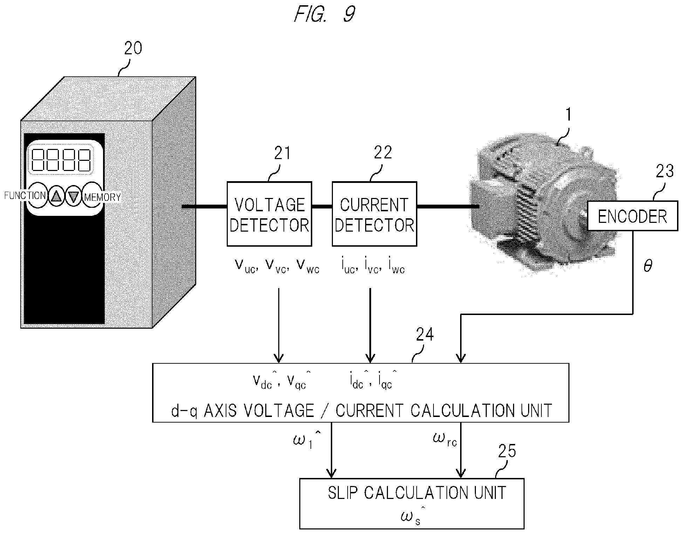

FIG. 9 is a diagram illustrating an example of a method for observing a slip frequency in an induction motor. In FIG. 9, a voltage detector 21 and a current detector 22 are attached to a power conversion device 20 that drives the induction motor 1, and an encoder 23 is attached to a shaft of the induction motor 1. In addition, there is provided, for example, a computer including a d-q axis voltage / current calculation unit 24 and a slip calculation unit 25.

The d-q axis voltage / current calculation unit 24 receives as inputs three-phase AC voltage detection values $v_{uc}$,

$v_{vc}$, and $v_{wc}$ detected by the voltage detector 21, three-phase AC current detection values $i_{uc}$, $i_{vc}$, and $i_{wc}$ detected by the current detector 22, and a position $\theta$ detected by the encoder 23 as a first step. The d-q axis voltage / current calculation unit 24 calculates d-axis and q-axis vector voltage components $v_{dc}{}^{\wedge}$ and $v_{qc}{}^{\wedge}$ and vector current components $i_{dc}{}^{\wedge}$ and $i_{qc}{}^{\wedge}$ using the inputs, and further differentiates the position $\theta$ to calculate a speed detection value $\omega_{rc}$.

Then, the d-q axis voltage / current calculation unit 24 calculates an output frequency command value $\omega_1{}^{\wedge}$ by a formula (15) or a formula (16) using the calculated vector voltage components $v_{dc}{}^{\wedge}$ and $v_{qc}{}^{\wedge}$ and vector current components $i_{dc}{}^{\wedge}$ and $i_{qc}{}^{\wedge}$ and electric circuit parameters of the induction motor 1 as a second step. As the electric circuit parameters of the induction motor 1, a result of off line / autotuning mounted on a general-purpose inverter or a designed value, for example, is used.

[Formula 15]

$$\omega_1{}^{\wedge} = \frac{v_{dc}{}^{\wedge} - R1^* i_{dc}{}^{\wedge}}{L\sigma^* i_{qc}{}^{\wedge}} \qquad \cdots(15)$$

[Formula 16]

$$\omega_1{}^{\wedge} = \frac{v_{qc}{}^{\wedge} - R1^* i_{qc}{}^{\wedge}}{\left(L\sigma^* i_{dc}{}^{\wedge} + M^{*2}/L2^* i_{dc}{}^{\wedge}\right)} \qquad \cdots(16)$$

The slip calculation unit 25 calculates a first slip frequency value $\omega_s{}^{\wedge}$ by a formula (17) using the output frequency command value $\omega_1{}^{\wedge}$ and the speed detection value $\omega_{rc}$. In addition, the slip calculation unit 25 calculates a second slip frequency value $\omega_s{}^{\wedge\wedge}$ by a formula (18) corresponding to the formula (11). Here, when the power conversion device 20 in the first embodiment is used, the first slip frequency value $\omega_s{}^{\wedge}$ matches the second slip frequency value $\omega_s{}^{\wedge\wedge}$.

[Formula 17]

$$\omega_s{}^{\wedge} = \omega_1{}^{\wedge} - \omega_{rc} \qquad \cdots(17)$$

[Formula 18]

$$\omega_s{}^{\wedge\wedge} = \frac{1}{T_2^* i_{dc}{}^{\wedge}} \cdot i_{qc}{}^{\wedge} + \frac{d}{dt}\left(tan^{-1}\left[\frac{i_{qc}{}^{\wedge}}{i_{dc}{}^{\wedge}}\right]\right) \qquad \cdots(18)$$

<Schematic Configuration of Principal Part of Power Conversion Device>

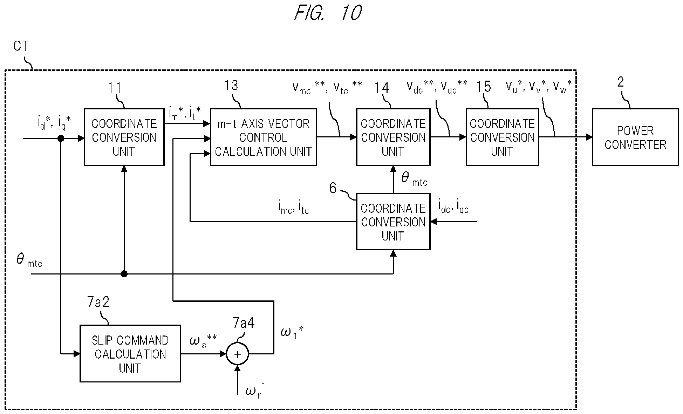

FIG. 10 is a block diagram illustrating a configuration example obtained by extracting a principal part in the power conversion device 20 illustrated in FIGs. 1 and 4. In FIG. 10, the power converter 2 converts DC power into AC power and outputs the AC power to the induction motor 1 based on voltage command values $v_u{}^*$, $v_v{}^*$, and $v_w{}^*$ in stationary coordinates. The controller CT calculates the voltage command values $v_u{}^*$, $v_v{}^*$, and $v_w{}^*$ in the stationary coordinates by vector control. Schematically, the controller CT adds, to a steady-state value of a slip frequency determined by a d-axis current $i_d$, a q-axis current $i_q$, and a secondary time constant $T_2$, a transient value determined by differential calculation using the d-axis current $i_d$ and the q-axis current $i_q$, to calculate a slip frequency command value $\omega_s{}^{**}$ according to the formula (11) using the slip command calculation unit 7a2.

Here, although a d-axis current command value $i_d{}^*$ and a q-axis delayed current command value $i_q{}^*_{td}$ are used as the d-axis current $i_d$ and the q-axis current $i_q$ in the formula (11), the present invention is not limited to this, but a d-axis current detection value $i_{dc}$ and a q-axis current detection value $i_{qc}$, for example, may be used. That is, ideally, the calculation is desirably performed using the d-axis current detection value $i_{dc}$ and the q-axis current detection value $i_{qc}$. However, the detection value can be more unstable than the command value. Accordingly, the command value is used here. In addition, the q-axis delayed current command value $i_q{}^*_{td}$ is used to bring the q-axis current command value $i_q{}^*$ closer to the q-axis current detection value $i_{qc}$.

Then, the controller CT adds a speed value of the induction motor 1, e.g., a speed estimation value $\omega_r{}^{\wedge}$ to the slip frequency command value $\omega_s{}^{**}$ using the addition unit 7a4, to calculate an output frequency command value $\omega_1{}^*$. The

speed value is obtained by detection or calculation. That is, the speed value is a speed detection value obtained by detection when speed sensor-equipped vector control is performed, although a speed estimation value $\omega_r{}^{\wedge}$ obtained by calculation when speed sensorless vector control as illustrated in FIG. 1 is performed.

On the other hand, the controller CT subjects the d-axis current command value $i_d{}^*$ and the q-axis current command value $i_q{}^*$ to coordinate conversion using the coordinate conversion unit 11, to calculate an m-axis current command value $i_m{}^*$ and a t-axis current command value it*. In addition, the controller CT subjects the d-axis current detection value $i_{dc}$ and the q-axis current detection value $i_{qc}$ to coordinate conversion using the coordinate conversion unit 6, to calculate an m-axis current detection value $i_{mc}$ and a t-axis current detection value $i_{tc}$.

Then, the controller CT calculates an m-axis voltage command value $v_{mc}{}^{**}$ and a t-axis voltage command value $v_{tc}{}^{**}$ based on the m-axis current command value $i_m{}^*$ and the t-axis current command value it*, the m-axis current detection value $i_{mc}$ and the t-axis current detection value $i_{tc}$, and the output frequency command value $\omega_1{}^*$ using the m-t axis vector control calculation unit 13. That is, the m-t axis vector control calculation unit 13 calculates the formula (7). Then, the controller CT sequentially subjects the m-axis voltage command value $v_{mc}{}^{**}$ and the t-axis voltage command value $v_{tc}{}^{**}$ to coordinate conversion using the coordinate conversion units 14 and 15, to calculate the voltage command values $v_u{}^*$, $v_v{}^*$, and $v_w{}^*$ in the stationary coordinates.

<Main Effects of First Embodiment>

From the foregoing, in the system according to the first embodiment, the transient value is included in the calculation of the slip frequency command value $\omega_s{}^{**}$, thereby making it possible to implement stable speed control in which no vibration occurs even if a speed response is enhanced. That is, high-accuracy and high-response speed control can be implemented. Further, when the speed of the induction motor 1 is estimated using m-t coordinates, a torque loss or a torque pulsation occurring when a primary resistance value in the induction motor 1 changes depending on a winding temperature can be suppressed, making it possible to implement high-accuracy and stable speed control.

(Second Embodiment)

<Details of Frequency Estimation and Phase Calculation Unit>

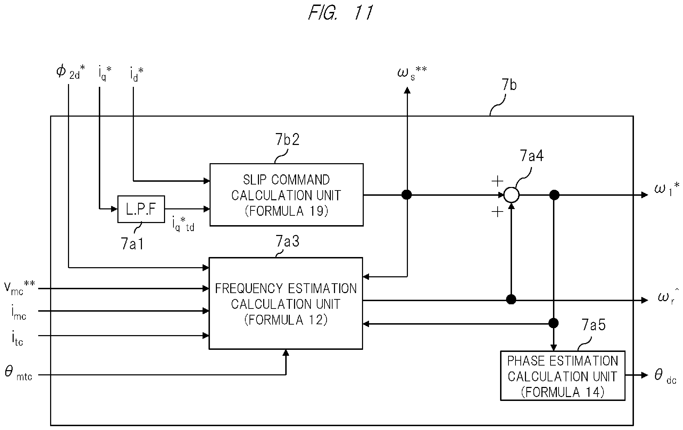

FIG. 11 is a block diagram illustrating a detailed configuration example of the frequency estimation and phase calculation unit 7 in FIG. 1 in a power conversion device according to a second embodiment. A frequency estimation and phase calculation unit 7b illustrated in FIG. 11 differs in a processing content of a slip command calculation unit 7b2 from that in the configuration example illustrated in FIG. 4. Although calculation of the arctangent "tan⁻¹" to the phase angle $\theta_\phi$ using the d-q axes current command values is required to calculate the slip frequency command value $\omega_s{}^{**}$ in FIG. 4, calculation of an arctangent "tan⁻¹" is not required in FIG. 11.

Specifically, the slip command calculation unit 7b2 calculates a slip frequency command value $\omega_s{}^{**}$ according to a formula (19) using a q-axis delayed current command value $i_q{}^*{}_{td}$ from a low-pass filter (L.P.F) 7a1, a d-axis current command value $i_d{}^*$, and a secondary time constant $T_2$. The formula (19) is obtained by expanding a differential of the arctangent "tan⁻¹" in the formula (11), and is equivalent to the formula (11).

[Formula 19]

$$\omega_s{}^{**} = \frac{i_q{}^*{}_{td}}{i_d{}^* T_2} + \frac{i_d{}^{*2}}{i_d{}^{*2} + i_q{}^*{}_{td}{}^2} \frac{d}{dt}\left[\frac{i_q{}^*{}_{td}}{i_d{}^*}\right] \qquad \cdots (19)$$

<Main Effects of Second Embodiment>

From the foregoing, similar effects to various types of effects described in the first embodiment are obtained by using the system according to the second embodiment. Further, the slip frequency command value $\omega_s{}^{**}$ can be calculated without providing a calculation table or the like in a controller CT. That is, in order to calculate the arctangent "tan⁻¹", a predetermined calculation table or the like usually needs to be referred to. However, in the system according to the second embodiment, the calculation table need not be thus referred to.

(Third Embodiment)

<Details of Frequency Estimation and Phase Calculation Unit>

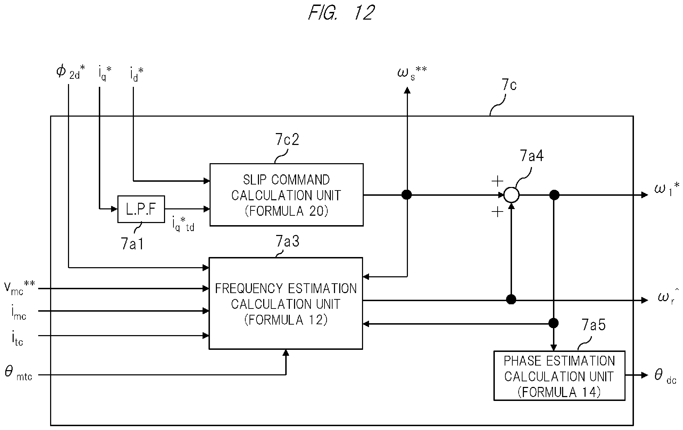

FIG. 12 is a block diagram illustrating a detailed configuration example of the frequency estimation and phase calculation unit 7 illustrated in FIG. 1 in a power conversion device according to a third embodiment. A frequency estimation and phase calculation unit 7c illustrated in FIG. 12 differs in a processing content of a slip command calculation unit 7c2 from that in the configuration example illustrated in FIG. 4. In FIG. 12, calculation of an arctangent "tan$^{-1}$" is not required either to calculate a slip frequency command value $\omega_s{}^{**}$, as in the case of FIG. 11.

The slip command calculation unit 7c2 calculates the slip frequency command value $\omega_s{}^{**}$ according to a formula (20) using a q-axis delayed current command value $i_q{}^*{}_{td}$ from a low-pass filter (L.P.F) 7a1, a d-axis current command value $i_d{}^*$, a secondary time constant $T_2$, and a t-axis current command value $i_t{}^*$. The formula (20) is obtained by replacing "$i_d{}^{*2} + i_q{}^*{}_{td}{}^2$" in the formula (19) with "$i_t{}^{*2}$", and is equivalent to the formula (19).

[Formula 20]

$$\omega_s{}^{**} = \frac{i_q{}^*{}_{td}}{i_d{}^* T_2} + \frac{i_d{}^{*2}}{i_t{}^{*2}} \frac{d}{dt}\left[\frac{i_q{}^*{}_{td}}{i_d{}^*}\right] \qquad \cdots (20)$$

<Main Effects of Third Embodiment>

From the foregoing, similar effects to various types of effects described in the first and second embodiments are obtained by using the system according to the third embodiment. In addition, when "$i_d{}^{*2} + i_q{}^*{}_{td}{}^2$" is replaced with "$i_t{}^{*2}$", calculation can be more simplified than in the case of the second embodiment.

(Fourth Embodiment)

<Details of Frequency Estimation and Phase Calculation Unit>

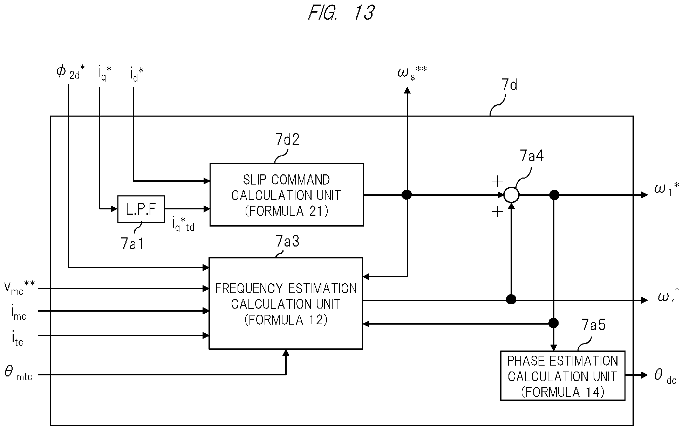

FIG. 13 is a block diagram illustrating a detailed configuration example of the frequency estimation and phase calculation unit 7 in FIG. 1 in a power conversion device according to a fourth embodiment. A frequency estimation and phase calculation unit 7d illustrated in FIG. 13 differs in a processing content of a slip command calculation unit 7d2 from that in the configuration example illustrated in FIG. 4. In FIG. 13, calculation of an arctangent "tan$^{-1}$" is not required either to calculate a slip frequency command value $\omega_s{}^{**}$, as in the case of FIG. 11.

The slip command calculation unit 7d2 calculates the slip frequency command value $\omega_s{}^{**}$ according to a formula (21) using a q-axis delayed current command value $i_q{}^*{}_{td}$ from a low-pass filter (L.P.F) 7a1, a d-axis current command value $i_d{}^*$, and a secondary time constant $T_2$. The formula (21) is obtained by making "tan$^{-1}$ ($i_q{}^*{}_{td}$ / $i_d{}^*$)" in the formula (11) approximate to "$i_q{}^*{}_{td}$ / $i_d{}^*$".

[Formula 21]

$$\omega_s{}^{**} = \frac{1}{T_2\, i_d{}^*} \cdot i_q{}^*{}_{td} + \frac{d}{dt}\left(\frac{i_q{}^*{}_{td}}{i_d{}^*}\right) \qquad \cdots (21)$$

<Main Effects of Fourth Embodiment>

From the foregoing, similar effects to various types of effects described in the first and second embodiments are obtained by using the system according to the fourth embodiment. In addition, calculation can be more simplified than in case of the third embodiment. However, the respective systems according to the first, second, and third embodiments are desirably used from the viewpoint of calculation accuracy.

(Fifth Embodiment)

<Outline of Motor Control System>

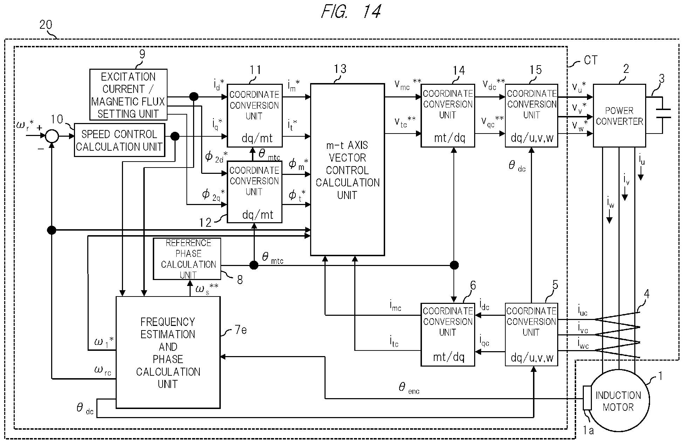

FIG. 14 is a block diagram illustrating a configuration example of a motor control system according to a fifth embodiment. Although speed sensorless control is used in FIG. 1, speed sensor-equipped control is used in FIG. 14. Accordingly, an encoder 1a is installed in an induction motor 1 in FIG. 14. The encoder 1a detects a phase of the induction motor 1, and outputs an encoder signal $\theta_{enc}$ representing a detection result. In addition, in FIG. 14, a frequency detection and phase calculation unit 7e is provided instead of the frequency estimation and phase calculation unit 7 in FIG. 1. The frequency detection and phase calculation unit 7e detects a speed value of the induction motor 1 based on the encoder signal $\theta_{enc}$.

<Details of Frequency Estimation and Phase Calculation Unit>

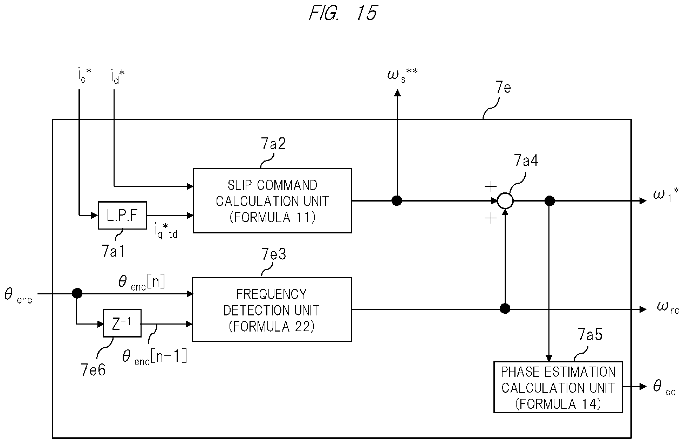

FIG. 15 is a block diagram illustrating a detailed configuration example of the frequency detection and phase calculation unit 7e in FIG. 14. In the frequency detection and phase calculation unit 7e illustrated in FIG. 15, a frequency detection unit 7e3 is provided instead of the frequency estimation calculation unit 7a3 and a hold circuit 7e6 is further provided, as compared with the configuration example illustrated in FIG. 4. The hold circuit 7e6 holds an encoder signal $\theta_{enc}$ [n] in a current detection cycle, to output an encoder signal $\theta_{enc}$ [n-1] in a previous detection cycle.

The frequency detection unit 7e3 detects the speed of the induction motor 1 as a speed detection value $\omega_{rc}$ according to a formula (22) using the encoder signal $\theta_{enc}$ [n] in the current detection cycle and the encoder signal $\theta_{enc}$ [n-1] in the previous detection cycle. In the formula (22), $t_{smp}$ represents a value in a speed detection cycle. The speed detection value $\omega_{rc}$ is used instead of the speed estimation value $\omega_r{}^\wedge$ illustrated in FIGs. 1 and 4, for example.
[Formula 22]

$$\omega_{rc} = (\theta_{enc}[n] - \theta_{enc}[n-1])/t_{smp} \qquad \cdots(22)$$

<Main Effects of Fifth Embodiment>

From the foregoing, similar effects to various types of effects described in the first embodiment are obtained by using the system according to the fifth embodiment. That is, similar effects are obtained even when not only speed sensorless control but also speed sensor-equipped control is used. Note that the system according to the fifth embodiment can of course be combined with the respective systems according to the second, third, and fourth embodiments.

(Sixth Embodiment)

<Outline of Motor Control System>

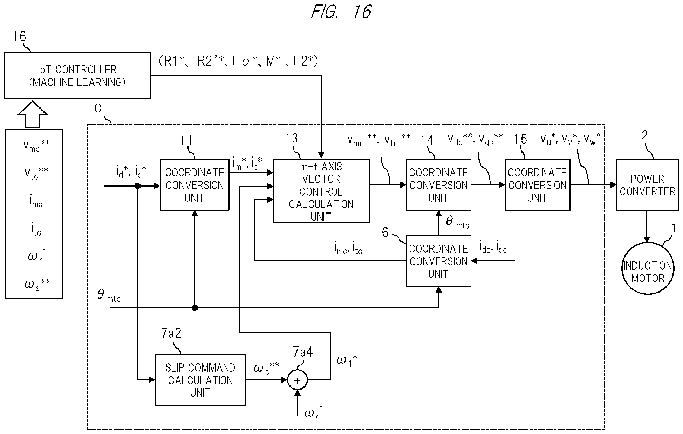

FIG. 16 is a block diagram illustrating a configuration example of a motor control system according to a sixth embodiment. In the configuration example illustrated in FIG. 1, for example, the system for fixedly setting the electric circuit parameters of the induction motor 1 in the controller CT, e.g., a microcontroller in advance has been used. On the other hand, in FIG. 16, there is provided a higher-level control device, e.g., an IoT controller 16 implemented by a cloud computer or the like.

The IoT controller 16 is connected to a power conversion device including a controller CT via a communication line, and controls the power conversion device. Specifically, the IoT controller 16 receives as an input a control state amount calculated in the controller CT via the communication line, calculates electric circuit parameters by machine learning, and resets the calculated electric circuit parameters in the controller CT via the communication line.

In FIG. 16, the controller CT illustrated in FIG. 10 is schematically illustrated. The IoT controller 16 receives as inputs m-axis and t-axis voltage command values $v_{mc}{}^{**}$ and $v_{tc}{}^{**}$ and current detection values $i_{mc}$ and $i_{tc}$, a speed estimation value $\omega_r{}^\wedge$, and a slip frequency command value $\omega_s{}^{**}$, for example, as the control state amount calculated in the controller CT. The IoT controller 16 performs machine learning using the inputs, thereby sequentially correcting electric circuit parameters (R1*, R2'*, L$\sigma$*, M*, and L2*) of the induction motor 1 to satisfy an equation of state of the induction motor 1 corresponding to the formula (7), for example. Then, the IoT controller 16 resets the corrected electric circuit parameters in an m-t axis vector control calculation unit 13 or the like, to subject the controller CT to feedback control.

<Main Effects of Sixth Embodiment>

From the foregoing, similar effects to the effects described in the first embodiment, for example, are also obtained by using the system according to the sixth embodiment. Further, the machine learning makes it possible to more accurately determine the electric circuit parameters of the induction motor 1 and as a result making it possible to make speed control of the induction motor 1 more highly accurate.

(Seventh Embodiment)

<Outline of Motor Control System>

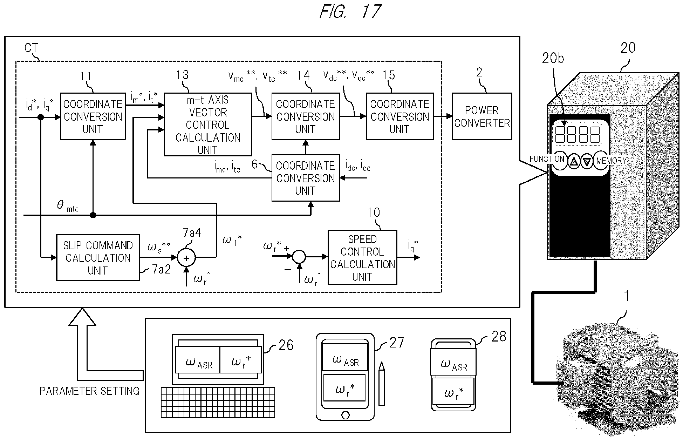

FIG. 17 is a block diagram illustrating a configuration example of a motor control system according to a seventh embodiment. In FIG. 17, an induction motor 1 drives industrial equipment such as a fan, a pump, and a crane. A power conversion device 20 is formed of one housing including a controller CT, a power converter 2, and a digital operator 20b as one of user interfaces. Here, a configuration, in which the speed control calculation unit 10 illustrated in FIG. 1 is added to the controller CT illustrated in FIG. 10, is simply illustrated. The controller CT is implemented by a microcontroller or a programmable logic controller, for example.

Specifically, the controller CT is mainly implemented when a processor incorporated in the microcontroller or the programmable logic controller executes a program stored in a memory incorporated therein. However, the controller CT may be implemented by a field programmable gate array (FPGA), an application specific integrated circuit (ASIC), or the like.

The power converter 2 is implemented by, for example, a three-phase inverter circuit including a switching element such as an MOSFET or an IGBT. The switching element may be a silicon (Si) semiconductor element or a wide bandgap semiconductor element such as silicon carbide (SiC) or gallium nitride (GaN). Note that the current detector 4 illustrated in FIG. 1 is implemented by, for example, a combination of a resistive element or a current transformer for current detection and an analog-to-digital converter that converts its detection value into a digital value.

In addition, FIG. 17 illustrates user terminals such as a personal computer 26, a tablet 27, and a smartphone 28. A user can set various types of parameters in the controller CT using the user terminals or using the digital operator 20b in the power conversion device 20. For example, the power conversion device 20 is directly connected via a local area network or the like or indirectly connected via the IoT controller 16 as illustrated in FIG. 16 to the user terminals.

The user can set control parameters, electric circuit parameters, and the like of the induction motor 1 to the controller CT via the user terminals and the local area network, for example. In this example, the user instructs the speed control calculation unit 10 in the controller CT of a response angular frequency $\omega_{ASR}$ of a speed control system, i.e., a proportional gain Kp_ASR and an integral gain Ki_ASR of speed control, a speed command value $\omega_r^*$ for the induction motor 1, and the like, which are expressed by the formula (6), via the user terminals.

Note that although a configuration that assumes the system according to the first embodiment is illustrated in FIG. 17, a configuration that assumes any one of the respective systems according to the second to sixth embodiments may be used. In addition, although the d-axis current command value $i_d^*$ and the q-axis delayed current command value $i_q{^*}_{td}$ have been used to calculate the slip frequency command value $\omega_s^{**}$, as expressed by the formula (11) and the formulas (19) to (21), in the first to sixth embodiments, d-axis and q-axis current detection values $i_{dc}$ and $i_{qc}$ may be used.

In addition, in the first to sixth embodiments, the voltage correction values $\Delta v_m^*$ and $\Delta v_t^*$ are calculated using the m-axis and t-axis current command values $i_m^*$ and it* and the current detection values $i_{mc}$ and $i_{tc}$, as expressed by the formula (8). Then, the voltage correction values $\Delta v_m^*$ and $\Delta v_t^*$ are respectively added to the voltage reference values $v_{mc}^*$ and $v_{tc}^*$, to calculate the m-axis and t-axis voltage command values $v_{mc}^{**}$ and $v_{tc}^{**}$, as expressed by the formula (9).

Instead, m-axis and t-axis voltage command values $v_{mc}^{***}$ and $v_{tc}^{***}$ may be calculated according to a formula (23) using m-axis and t-axis current command values $i_m^*$ and it* and current detection values $i_{mc}$ and $i_{tc}$. In the formula (23), Kp_m1 represents a proportional gain of m-axis current control, and Ki_m1 represents an integral gain of m-axis current control. Kp_t1 represents a proportional gain of t-axis current control, and Ki_t1 represents an integral gain of t-axis current control.

[Formula 23]

$$\left[ \begin{matrix} v_{mc}{}^{***} = \left( Kp\_m1 + \dfrac{Ki\_m1}{s} \right)(i_m{}^* - i_{mc}) \\[4mm] v_{tc}{}^{***} = \left( Kp\_t1 + \dfrac{Ki\_t1}{s} \right)(i_t{}^* - i_{tc}) \end{matrix} \right] \quad \cdots (23)$$

Alternatively, m-axis and t-axis intermediate current command values $i_m^{**}$ and it** may be calculated according to a formula (24) using the m-axis and t-axis current command values $i_m^*$ and it* and current detection values $i_{mc}$ and $i_{tc}$. In the formula (24), Kp_m2 represents a proportional gain of m-axis current control, and Ki_m2 represents an integral gain of m-axis current control. Kp_t2 represents a proportional gain of t-axis current control, and Ki_t2 represents an integral gain of t-axis current control.

[Formula 24]

$$\left[\begin{array}{l} i_m{}^{**} = \left( Kp\_m2 + \dfrac{Ki\_m2}{s} \right)(i_m{}^* - i_{mc}) \\[4mm] i_t{}^{**} = \left( Kp\_t2 + \dfrac{Ki\_t2}{s} \right)(i_t{}^* - i_{tc}) \end{array}\right] \quad \cdots (24)$$

When the formula (24) is used, m-axis and t-axis voltage command values $v_{mc}{}^{****}$ and $v_{tc}{}^{****}$ are further calculated according to a formula (25) using a speed estimation value $\omega_r{}^\wedge$, an output frequency command value $\omega_1{}^*$, m-axis and t-axis magnetic flux command values $\phi_m{}^*$ and $\phi_t{}^*$, and electric circuit parameters ($R^*$, $L\sigma^*$, $M^*$, and $L2^*$) of the induction motor 1. In the formula (25), $R^*$ is "$R1^* + R2'^*$" by referring to the formula (7), and $T_{ACR}$ represents a time constant corresponding to a delay in current control.

[Formula 25]

$$\left[\begin{array}{l} v_{mc}{}^{****} = R^* i_m{}^{**} - \omega_1{}^* L\sigma^* \dfrac{1}{1 + T_{ACR} \cdot s} i_t{}^{**} - \omega_r{}^\wedge \dfrac{M^*}{L2^*} \phi_t{}^* - \dfrac{R2'^*}{M^*} \phi_m{}^* \\[4mm] v_{tc}{}^{****} = R^* i_t{}^{**} + \omega_1{}^* L\sigma^* \dfrac{1}{1 + T_{ACR} \cdot s} i_m{}^{**} + \omega_r{}^\wedge \dfrac{M^*}{L2^*} \phi_m{}^* - \dfrac{R2'^*}{M^*} \phi_t{}^* \end{array}\right] \quad \cdots (25)$$

Alternatively, a voltage correction value $\Delta v_{mp}{}^*$ of an m-axis proportional calculation component and a voltage correction value $\Delta v_{mi}{}^*$ of an m-axis integral calculation component and a voltage correction value $\Delta v_{tp}{}^*$ of a t-axis proportional calculation component and a voltage correction value $\Delta v_{ti}{}^*$ of a t-axis integral calculation component may be calculated according to a formula (26) using the m-axis and t-axis current command values $i_m{}^*$ and $it^*$ and current detection values $i_{mc}$ and $i_{tc}$. In the formula (26), Kp_m3 represents a proportional gain of m-axis current control, and Ki_m3 represents an integral gain of m-axis current control. Kp_t3 represents a proportional gain of t-axis current control, and Ki_t3 represents an integral gain of t-axis current control.

[Formula 26]

$$\left[\begin{array}{l} \Delta v_{mp}{}^* = Kp\_m3\,(i_m{}^* - i_{mc}) \\[3mm] \Delta v_{mi}{}^* = \dfrac{Ki\_m3}{s}\,(i_m{}^* - i_{mc}) \\[3mm] \Delta v_{tp}{}^* = Kp\_t3\,(i_t{}^* - i_{tc}) \\[3mm] \Delta v_{ti}{}^* = \dfrac{Ki\_t3}{s}\,(i_t{}^* - i_{tc}) \end{array}\right] \quad \cdots (26)$$

When the formula (26) is used, m-axis and t-axis voltage command values $v_{mc}{}^{*****}$ and $v_{tc}{}^{*****}$ are further calculated according to a formula (27) using the speed estimation value $w_r{}^\wedge$, the output frequency command value $\omega_1{}^*$, the m-axis and t-axis magnetic flux command values $\phi_m{}^*$ and $\phi_t{}^*$, and the electric circuit parameters of the induction motor 1. In the formula (27), the electric circuit parameters are similar to those in the formula (25) .

[Formula 27]

$$\left[\begin{array}{l} v_{mc}{}^{*****} = \Delta v_{mp}{}^* + \Delta v_{mi}{}^* - \omega_1{}^* \dfrac{L\sigma^*}{R^*} \Delta v_{ti}{}^* - \omega_r{}^\wedge \dfrac{M^*}{L2^*} \phi_t{}^* - \dfrac{R2'^*}{M^*} \phi_m{}^* \\[4mm] v_{tc}{}^{*****} = \Delta v_{tp}{}^* + \Delta v_{ti}{}^* + \omega_1{}^* \dfrac{L\sigma^*}{R^*} \Delta v_{mi}{}^* + \omega_r{}^\wedge \dfrac{M^*}{L2^*} \phi_m{}^* - \dfrac{R2'^*}{M^*} \phi_t{}^* \end{array}\right] \quad \cdots (27)$$

<Main Effects of Seventh Embodiment>

From the foregoing, similar effects to the effects described in the first embodiment, for example, are also obtained by using the system according to the seventh embodiment. Particularly when the response angular frequency $\omega_{ASR}$ of the speed control system is changed by the user depending on the use of the induction motor 1, stable speed control in which no vibration or the like occurs can also be implemented.

Although the invention made by the inventors has been specifically described above based on the embodiments, the invention is not limited to the above embodiments, but various modifications can be made without departing from the scope thereof. For example, the above embodiments have been described in detail for easy understanding of the invention, and are not necessarily limited to those including all described components. In addition, it is possible to replace some of the components in the certain embodiment with the components in the other embodiment, and it is also possible to add, to the components in the certain embodiment, the components in the other embodiment. In addition, it is possible to add other components to, delete, and replace some of the components in each of the embodiments.

EXPLANATION OF REFERENCE CHARACTERS

1... induction motor, 2...power converter, 3...DC power supply, 4...current detector, 5... coordinate conversion unit, 6...coordinate conversion unit, 7, 7a to 7d...frequency estimation and phase calculation unit, 7a1...low-pass filter, 7a2 to 7d2... slip command calculation unit, 7e... frequency detection and phase calculation unit, 8...reference phase calculation unit, 9...excitation current / magnetic flux setting unit, 10...speed control calculation unit, 11...coordinate conversion unit, 12...coordinate conversion unit, 13...m-t axis vector control calculation unit, 14... coordinate conversion unit, 15...coordinate conversion unit, 16...IoT controller, 20...power conversion device, 23...encoder, CT...controller, $i_d^*$...d-axis current command value, $i_q^*$...q-axis current command value, $i_q^*{}_{td}$...q-axis delayed current command value, $i_{dc}$...d-axis current detection value, $i_{qc}$...q-axis current detection value, $v_{dc}^{**}$...d-axis voltage command value, $v_{qc}^{**}$... q-axis voltage command value, $i_m^*$...m-axis current command value, $it^*$... t-axis current command value, $i_{mc}$...m-axis current detection value, $i_{tc}$...t-axis current detection value, $v_{mc}^{**}$...m-axis voltage command value, $v_{tc}^{**}$...t-axis voltage command value, $\omega_r^*$... speed command value, $\omega_r^\wedge$... speed estimation value, $\omega_{rc}$...speed detection value, $\omega_s^{**}$... slip frequency command value, $\omega_1^*$... output frequency command value, $\omega_{ASR}$...response angular frequency of speed control system, $v_u^*$, $v_v^*$, $v_w^*$... three-phase AC voltage command value, $i_{uc}$, $i_{vc}$, $i_{wc}$ ... three-phase current detection value

**Claims**

1. A power conversion device comprising:

   a power converter that converts DC power into AC power and outputs the AC power to an induction motor based on a voltage command value in stationary coordinates; and
   a controller that calculates the voltage command value in the stationary coordinates by vector control,
   wherein the controller

   uses d-q coordinates as rotating coordinates in which an axis representing a magnetic flux direction of the induction motor is defined as a d-axis and an axis representing a direction perpendicular to the d-axis is defined as a q-axis, to add, to a steady-state value of a slip frequency determined by a d-axis current, a q-axis current, and a secondary time constant, a transient value determined by differential calculation using the d-axis current and the q-axis current to calculate a slip frequency command value,
   adds a detected or calculated speed value of the induction motor to the slip frequency command value to calculate an output frequency command value,
   uses m-t coordinates in which an axis representing a primary current direction is defined as a t-axis and an axis representing a direction perpendicular to the t-axis is defined as an m-axis, to subject a current command value of the d-axis and a current command value of the q-axis to coordinate conversion to calculate a current command value of the m-axis and a current command value of the t-axis and to subject a current detection value of the d-axis and a current detection value of the q-axis to coordinate conversion to calculate a current detection value of the m-axis and a current detection value of the t-axis, and
   calculates a voltage command value of the m-axis and a voltage command value of the t-axis based on the m-axis current command value and the t-axis current command value, the m-axis current detection value and the t-axis current detection value, and the output frequency command value, and subjects the m-axis voltage command value and the t-axis voltage command value to coordinate conversion to calculate the voltage command value in the stationary coordinates.

2. The power conversion device according to claim 1,
   wherein the controller delays the q-axis current command value using a low-pass filter to calculate a delayed current command value of the q-axis, and calculates the transient value in the slip frequency command value by "$d / dt (\tan^{-1} (i_q^*{}_{td} / i_d^*))$", where "$i_d^*$" represents the d-axis current command value and "$i_q^* t_{td}$" represents the q-axis delayed current command value.

3.  The power conversion device according to claim 1,
    wherein the controller delays the q-axis current command value using a low-pass filter to calculate a delayed current command value of the q-axis, and calculates the transient value in the slip frequency command value by "$(i_d^{*2} / (i_d^{*2} + i_{q\,td}^{*2})) \times d / dt (i_{q\,td}^* / i_d^*)$", where "$i_d^*$" represents the d-axis current command value and "$i_{q\,wd}^{*}$" represents the q-axis delayed current command value.

4.  The power conversion device according to claim 1,
    wherein the controller delays the q-axis current command value using a low-pass filter to calculate a delayed current command value of the q-axis, and calculates the transient value in the slip frequency command value by "$(i_d^{*2} / i_t^{*2}) \times d / dt (i_{q\,td}^* / i_d^*)$", where "$i_d^*$" represents the d-axis current command value, "$i_{q\,td}^*$" represents the q-axis delayed current command value, and "$it^*$" represents the t-axis current command value.

5.  The power conversion device according to claim 1,
    wherein the controller delays the q-axis current command value using a low-pass filter to calculate a delayed current command value of the q-axis, and calculates the transient value in the slip frequency command value by "$d / dt (i_{q\,td}^* / i_d^*)$", where "$i_d^*$" represents the d-axis current command value and "$i_{q\,td}^*$" represents the q-axis delayed current command value.

6.  The power conversion device according to claim 1,
    wherein the controller calculates a speed value of the induction motor using the m-axis current detection value and the t-axis current detection value.

7.  The power conversion device according to claim 1,

    wherein an encoder that detects a phase of the induction motor is installed in the induction motor, and
    wherein the controller detects a speed value of the induction motor based on an output signal of the encoder.

8.  The power conversion device according to any one of claims 1 to 7,
    wherein the controller makes a response frequency of a speed control system variably settable depending on an instruction from a user.

9.  A motor control system comprising:

    a power conversion device including a power converter that converts DC power into AC power and outputs the AC power to an induction motor based on a voltage command value in stationary coordinates and a controller that calculates the voltage command value in the stationary coordinates by vector control; and
    a higher-level control device that controls the power conversion device,
    wherein the controller

    uses d-q coordinates as rotating coordinates in which an axis representing a magnetic flux direction of the induction motor is defined as a d-axis and an axis representing a direction perpendicular to the d-axis is defined as a q-axis, to add, to a steady-state value of a slip frequency determined by a d-axis current, a q-axis current, and a secondary time constant, a transient value determined by differential calculation using the d-axis current and the q-axis current to calculate a slip frequency command value,
    adds a detected or calculated speed value of the induction motor to the slip frequency command value to calculate an output frequency command value,
    uses m-t coordinates in which an axis representing a primary current direction is defined as a t-axis and an axis representing a direction perpendicular to the t-axis is defined as an m-axis, to subject a current command value of the d-axis and a current command value of the q-axis to coordinate conversion to calculate a current command value of the m-axis and a current command value of the t-axis and to subject a current detection value of the d-axis and a current detection value of the q-axis to coordinate conversion to calculate a current detection value of the m-axis and a current detection value of the t-axis, and
    calculates a voltage command value of the m-axis and a voltage command value of the t-axis based on the m-axis current command value and the t-axis current command value, the m-axis current detection value and the t-axis current detection value, and the output frequency command value, and subjects the m-axis voltage command value and the t-axis voltage command value to coordinate conversion to calculate the voltage command value in the stationary coordinates, and

wherein the higher-level control device receives as inputs at least the m-axis voltage command value and the t-axis voltage command value and the m-axis current detection value and the t-axis current detection value, which are calculated by the controller, corrects an electric circuit parameter of the induction motor used for calculation in the controller by machine learning using the received values, and resets the corrected electric circuit parameter in the controller.

10. The motor control system according to claim 9, wherein
the controller delays the q-axis current command value using a low-pass filter to calculate a delayed current command value of the q-axis, and calculates the transient value in the slip frequency command value by "$d/dt\,(\tan^{-1}\,(i_q{}^*{}_{td}/i_d{}^*))$", where "$i_d{}^*$" represents the d-axis current command value and "$i_q{}^*t_{td}$" represents the q-axis delayed current command value.

11. The motor control system according to claim 9 or 10,
wherein the controller makes a response frequency of a speed control system variably settable depending on an instruction from a user.

EP 4 625 809 A1

*FIG. 1*

## FIG. 2

### VECTOR d-q AXIS

q AXIS

$i_q$

$i_1$

$$i_1 = \sqrt{i_d^2 + i_q^2}$$

$$\theta_\phi = \tan^{-1}\left[\frac{i_q}{i_d}\right]$$

$\theta_\phi$

d AXIS $\omega_1$

$i_d$

## FIG. 3

### PRIMARY CURRENT m-t AXIS

t AXIS

q AXIS

$i_t$

$i_q$

$$i_1 = \sqrt{i_m^2 + i_t^2}$$

$$i_m = 0$$

$$i_t = i_1$$

$i_1$

d AXIS $\omega_1$

$\theta_\phi$

$$\theta_{mt} = \frac{\pi}{2} - \theta_\phi$$

$i_d$

m AXIS

$i_m$

*FIG. 4*

## FIG. 5

$\omega_{ASR} = 1/T_2$

$\omega_r$

$\omega_r^*$

A    B    C    D

TIME (sec)

## FIG. 6

$\omega_{ASR} = 5/T_2$

$\omega_r$

$\omega_r^*$

E                                F

TIME (sec)

*FIG. 7*

$$\omega_{ASR} = 5/T_2$$

$\omega_r$

$\omega_r^*$

TIME (sec)

*FIG. 8*

$$\omega_{ASR} = 10/T_2$$

$\omega_r$

$\omega_r^*$

TIME (sec)

*FIG. 9*

20

21

VOLTAGE
DETECTOR

22

CURRENT
DETECTOR

1

23

ENCODER

$v_{uc}$, $v_{vc}$, $v_{wc}$

$i_{uc}$, $i_{vc}$, $i_{wc}$

$\theta$

24

$\hat{v_{dc}}$, $\hat{v_{qc}}$

$\hat{i_{dc}}$, $\hat{i_{qc}}$

d-q AXIS VOLTAGE / CURRENT CALCULATION UNIT

$\hat{\omega_1}$

$\omega_{rc}$

25

SLIP CALCULATION UNIT

$\hat{\omega_s}$

*FIG. 10*

*FIG. 11*

*FIG. 12*

FIG. 13

*FIG. 14*

FIG. 15

*FIG. 16*

*FIG. 17*

## INTERNATIONAL SEARCH REPORT

| International application No. |
|---|
| **PCT/JP2023/023296** |

| A. | CLASSIFICATION OF SUBJECT MATTER |
|---|---|

*H02P 21/22*(2016.01)i; *H02P 21/05*(2006.01)i
FI:   H02P21/22; H02P21/05

According to International Patent Classification (IPC) or to both national classification and IPC

| B. | FIELDS SEARCHED |
|---|---|

Minimum documentation searched (classification system followed by classification symbols)

H02P21/22; H02P21/05

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 4-304183 A (KABUSHIKI KAISHA MEIDENSHA) 27 October 1992 (1992-10-27) paragraphs [0110]-[0138], fig. 1 | 1-11 |
| A | JP 5-199784 A (KABUSHIKI KAISHA MEIDENSHA) 06 August 1993 (1993-08-06) paragraphs [0017]-[0019], fig. 5, 6 | 1-11 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/023296**

| Patent document cited in search report | Publication date (day/month/year) | Patent family member(s) | Publication date (day/month/year) |
|---|---|---|---|
| JP 4-304183 A | 27 October 1992 | (Family: none) | |
| JP 5-199784 A | 06 August 1993 | US 5341081 A column 1, lines 1-51, fig. 1-5 EP 637870 A1 CA 2101796 A1 | |

Form PCT/ISA/210 (patent family annex) (January 2015)

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•  JP 2018182989 A